# EUROPEAN PATENT APPLICATION

(11) **EP 4 234 067 A1**
(43) Date of publication of application: **30.08.2023**
(21) Application number: 22382153.9
(22) Date of filing: 23.02.2022
(51) Int. Cl.: B01D 53/04, B01D 53/26

(54) **SYSTEMS FOR THE REMOVAL OF ONE OR MORE CONTAMINATING GASES FROM ATMOSPHERIC AIR, KITS AND METHODS**

(71) Applicant: Obdfuture Diag & Keys, SL, 28006 Madrid (ES)
(72) Inventor: CABRAL HERRERA, Pedro Antonio, 08940 CORNELLA DE LLOBREGAT (ES); GUASCH ALBERTI, Victor, 08028 BARCELONA (ES); NAVARRETE WEEGE, Pablo, 43700 EL VENDRELL (ES); COLANGELO MARIANO, Enzo Adrian, 08013 BARCELONA (ES)
(74) Representative: ZBM Patents - Zea, Barlocci & Markvardsen

(57) **Abstract**

According to a first aspect, a system for the removal of one or more contaminating gases from atmospheric air is provided. The system comprises a compressor unit configured to receive and compress atmospheric air. The system further comprises a contaminating gases capture unit configured to remove, at least partially, the contaminating gases from the compressed atmospheric air, wherein the contaminating gases capture unit is arranged downstream from the compressed air dryer unit and a pressure vessel configured to release depolluted atmospheric air to the atmosphere, wherein the pressure vessel is arranged downstream from the contaminating gases capture unit. Methods for the removal of one or more contaminating gases from atmospheric air are also provided.

## Description

The present disclosure relates to systems for the removal of one or more contaminating gases from atmospheric air. The present disclosure further relates to kits including such systems and methods for the removal of one or more contaminating gases from atmospheric air.

### BACKGROUND

Global warming and climate change have attracted the attention of societies, governments, industries and scientists in recent times. A rapid growth in population and the resultant increased energy demands impose extraordinary challenges. Carbon dioxide (CO₂) is the dominant anthropogenic greenhouse gas (82%) and in the last fifty years its atmospheric concentration has increased. In relation to global warming effects, the estimate for the contribution of CO₂ is approximately 60 %.

The reduction of CO₂ and other contaminating gases may be achieved by targeted actions such as the reduction of the use of fossil fuels by adopting alternative forms of energy, or by developing new gas sequestration or gas separation technologies. In any case, a satisfactory replacement of fossil fuels is not expected to be achieved within the next few decades.

Gas separation by adsorption has many different applications in industry, for example removing a specific component from a gas stream, where the desired product can either be the component removed from the stream, the remaining depleted stream, or both. Thereby both, trace components as well as major components of the gas stream can be targeted by the adsorption process. One important application is capturing carbon dioxide (CO2) or other gases from gas streams, e.g., from flue gases, exhaust gases, industrial waste gases, or atmospheric air. Capturing CO2 directly from the atmosphere, referred to as direct air capture (DAC), is one of several means of mitigating anthropogenic greenhouse gas emissions.

However, current DAC systems are energy-intensive and require specialized equipment. Additionally, the DAC systems are generally quite large and heavy. Consequently, the running costs of DAC systems are typically high.

Examples of the present disclosure seek to provide improved systems and methods for the removal of one or more contaminating gases from atmospheric air.

### SUMMARY

According to a first aspect, a system for the removal of one or more contaminating gases from atmospheric air is provided. The system comprises a compressor unit configured to receive and compress atmospheric air. The system further comprises a contaminating gases capture unit configured to remove, at least partially, the contaminating gases from the compressed atmospheric air, wherein the contaminating gases capture unit is arranged downstream from the compressor unit and an air expansion unit configured to release depolluted atmospheric air to the atmosphere, wherein the air expansion unit is arranged downstream from the contaminating gases capture unit.

According to this first aspect, a system for the removal of one or more contaminating gases from atmospheric air is provided. The system combines a compressor unit, a contaminating gases capture unit and an air expansion unit.

The inventors have found that the use of a compressor unit (and thus the fact to apply a pressure to the received atmospheric air) leads to increased contaminating gases pressures. Under these working conditions, the system can be designed relatively small and lightweight (as compared e.g., to known DAC systems). For example, the system may have a relatively low weight between 500 kilograms and 1000 kilograms. It is noted that this is critical in facilities e.g., containers housing the systems for the removal of one or more contaminating gases from atmospheric air, wherein the space is an issue.

Additionally, the system provides a cost-effective contaminating gases capture system because a contaminating gases capture unit is integrated together with e.g., an existing compressor unit and / or an existing air expansion unit. As a result, the system is designed relatively low-cost because relatively few specialized components are required.

In summary, a system for the removal of one or more contaminating gases from atmospheric air that is efficient, cost-effective (particularly in terms of material, transport and installation) and versatile and that can be used effectively to remove a large variety of contaminating gases is provided.

In yet another aspect, a kit is provided. The kit includes a system for the removal of one or more contaminating gases from atmospheric air according to the first aspect. The kit further includes a housing for accommodating such system for the removal of one or more contaminating gases from atmospheric.

According to this aspect, a housing for the removal of one or more contaminating gases from atmospheric air according to the first aspect is provided. Since, as commented above, the system is designed relatively small and lightweight, the system can be accommodated also in a relatively small and lightweight housing (e.g., a suitable container). The housing (and thus the system, in use, accommodated inside the housing) can thus be easily transported, situated, and installed and in any desired location.

In some examples, the enclosure is configured to act as the air expansion unit adapted to release the decontaminated atmospheric air to the atmosphere.

According to this example, the enclosure may act as the air expansion unit adapted to release the previously decontaminated atmospheric air to the atmosphere. As a result, the system is designed in an even more cost-efficient way since the use of a specialized expansion unit may be avoided. Instead, the housing may be configured to release depolluted atmospheric air to the atmosphere, and, at the same time, the housing may allocate, in use, the system for the removal of one or more contaminating gases from atmospheric air. A kit for the removal of one or more contaminating gases from atmospheric air with relatively few components is thus provided.

According to a further aspect, a method for the removal of one or more contaminating gases from atmospheric air, using a system according to the first aspect, is provided. The method comprises: receiving atmospheric air. The method further comprises: compressing the received atmospheric air, removing, at least partially, contaminating gases from the compressed atmospheric air, decompressing, at least partially, the depolluted compressed air and releasing depolluted atmospheric air to the atmosphere.

### BRIEF DESCRIPTION OF THE DRAWINGS

Non-limiting examples of the present disclosure will be described in the following, with reference to the appended drawings, in which:
Figure 1 illustrates a schematic view of a system for the removal of one or more contaminating gases from atmospheric air,
Figure 2 schematically illustrates an example of the system for the removal of one or more contaminating gases from atmospheric air,
Figure 3 schematically illustrates an example of the housing configured to accommodate a system which may be the same or similar to the one described with reference to figure 1 or figure 2,
Figure 4 is an illustration of a block diagram describing an example of a method for the removal of one or more contaminating gases from atmospheric air using a system which may be the same or similar to the one described with reference to figure 1 or figure 2.

### DETAILED DESCRIPTION OF EXAMPLES

Along the present description and claims the term "CO*_{X}*" is to be understood as a carbon oxide (e.g., carbon monoxide, carbon dioxide and so forth). Similarly, along the present description and claims, the term "NOx" is to be understood as a nitrogen oxide (e.g., nitrogen monoxide, nitrogen dioxide and so forth) and the term "SO*_{X}*" is to be understood as sulfur oxide (e.g., sulfur monoxide, sulfur dioxide and so forth).

Along the present description and claims the term "*atmospheric air*" is to be understood as the layer of gases retained by Earth's gravity that surrounds the planet and forms its planetary atmosphere. By mole fraction (i.e., by number of molecules), dry air may contain 78% nitrogen, 20% oxygen, 0.90% argon, 0.04% carbon dioxide, and small amounts of other gases. Air may also contain a variable amount of water vapor, on average around 1% at sea level.

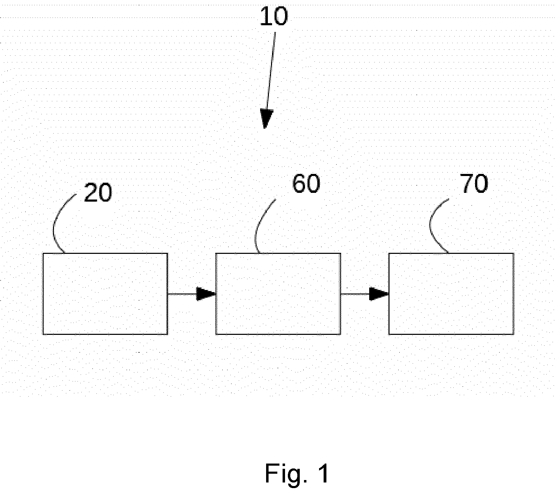

Figure 1 illustrates a schematic view of the system for the removal of one or more contaminating gases from atmospheric air. The system 10 comprises a compressor unit 20 configured to receive and compress atmospheric air.

A contaminating gases capture unit 60 is also provided in this example. The contaminating gases capture unit 60 is configured to remove, at least partially, contaminating gases from the compressed atmospheric air. Examples of contaminating gases may be COx, NOx, SOx and / or methane. As can be seen in the figure, the contaminating gases capture unit 60 is arranged downstream from the compressor unit 20.

The system 10 further comprises an air expansion unit 70 configured to release decontaminated atmospheric air to the atmosphere, wherein the air expansion unit 70 is arranged downstream from the contaminating gases capture unit 60. The air expansion unit 70 may be e.g., a pressure vessel.

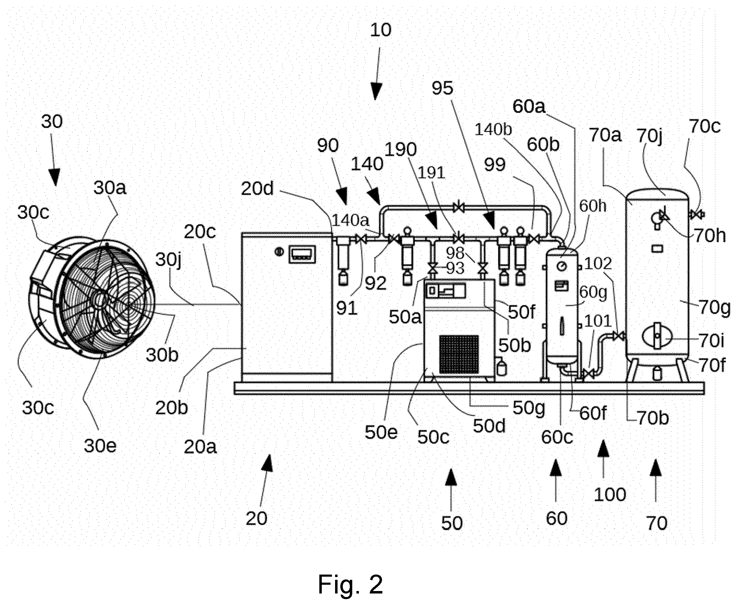

Figure 2 schematically illustrates an example of a system for the removal of one or more contaminating gases from atmospheric air. The system 10 comprises a compressor unit 20. The compressor unit 20 may be an Oil-injected rotary screw compressor.

The compressor 20 may comprise an air tank 20a comprising an outside surface 20b, an inlet 20c and an outlet 20d.

The inlet 20c may be configured to receive (polluted) atmospheric air. For example, the air may be received by an air suction unit 30 as will be described later on. The received atmospheric air may be polluted e.g., with CO_{X}, SOₓ, and / or methane among other gases. The inlet flow of (polluted) atmospheric air received by the compressor 20 may be between 2 cubic meters per hour and 20 cubic meters per hour. The inlet 20c may be provided with a filter (not visible) configured to remove, at least partially, pollutant particles from the air flow received and absorbed through the inlet 20c. Moreover, the compressor 20 may be provided with an internal air dryer (not visible) configured to, at least partially, remove humidity from the compressed atmospheric air.

The received (polluted) atmospheric air may be compressed substantially as follows: Atmospheric air may be received (and suctioned) via the inlet 20c. The atmospheric air may further be filtered, using the inlet filter (not visible), such that some air pollutants particles may be eliminated. Then, the filtered atmospheric air may be delivered to the tank 20a and compressed by the compressor. The compressor may be configured to compress the received atmospheric air e.g., at a pressure between 10 bar and 16 bar (specifically between 7 bar and 16 bar and more specifically at a pressure of 7 bar). The compressed air may be dried, by the air dryer forming part of the compressor unit, such that the humidity of the compressed air may be at least partially eliminated. Finally, the compressed atmospheric air may be released via the outlet 20d.

In examples, an air suction unit 30 configured to absorb and drive atmospheric air to the compressor unit 20 may also be provided. The air suction unit 30 may be e.g., an exhaust fan. The air suction unit 30 may be arranged upstream from the compressor 20. In use, the air suction unit 30 may be mounted and installed in any orientation, such as in a vertical orientation e.g., in a wall, a horizontal orientation e.g., in a ceiling, or in any other orientation desired.

Particularly, although not shown in this figure, the air suction unit 30 may be secured within a wall, ceiling, or other suitable structure in a partially or fully recessed position. In such cases, the air suction unit 30 may be received within an aperture in the wall, ceiling, or other structure, and can be secured to any suitable element(s) (e.g., one or more wall or ceiling joists) in order to secure the air suction unit 30 in place within the aperture.

A back cover or louver 30a of the air suction unit 30 may be provided. The air suction unit 30 may operate to draw air through one or more apertures or vents in the louver 30a and to discharge the air through an outlet 30b. The outlet 30b of the air suction unit 30 may have any shape (round, oval, rectangular, irregular, and the like) for connection to a similarly sized duct 30j that directs the airflow to the inlet 20c of the compressor 20.

The air suction unit 30 may have a housing 30c formed from sheet metal or other suitable material of a thickness sufficient to provide the necessary structural strength for the components forming part of the air suction unit (e.g., a motor (not visible) or a fan wheel). The housing 30b may have any shape desired, such as a round shape, a rectangular, triangular, or other polygonal shape, an irregular shape, and the like. The housing 30c illustrated in figure 2 has a generally circular shape, and has the back louver 30a, a substantially circular wall 30d and a front cover 30e with through-holes. Together, the back louver, front cover and the circular wall at least partially define an interior space of the air suction unit 30.

Fasteners (not shown) may be employed to secure the housing 30c (and therefore, the air suction unit 30) to any kind of structure. In such cases, the fasteners may attach any part of the housing 30c to the structure (not shown in this figure), such as the back louver, the circular wall, or flanges located anywhere on the housing 30b, and can extend through corresponding attachment holes for this purpose.

In some examples, a gas storage bag (not shown) configured to store atmospheric air may also be provided. The gas storage bag may be arranged downstream from the air suction unit 30 and upstream from the compressor 20. The gas storage bag may be e.g., a flexible single-chamber gas storage bag. The gas storage bag may be made e.g., of an extra-strong polyester fabric coated with plastomers or elastomers. In use, the gas storage bag (not shown) may be configured to store and release atmospheric air, via an outlet, to the compressor 20 and further adapted to dampen possible air oscillations.

Referring again to the compressor 20, the compressed atmospheric air released, by such compressor 20, may still be polluted with contaminants related to the lubrication of the compressor, the intake air, and the compressor installation itself. It is noted that a contaminated compressed air may reduce the performance of the system 10 for the removal of one or more contaminating gases from atmospheric air and it may raise the maintenance cost of such system 10 as well as a reduce the productivity.

In the respect, a compressed air filter (not shown) may be provided. The compressed air filter may be arranged downstream from the compressor.

Particularly, the filter (not shown) may be configured to reduce or eliminate e.g., oil aerosol, wet dust and water drops in the compressed air (stream) received by such filter. The filter may be based on a two-in-one filtration concept which reduces installation space and complexity, thus this filter is particularly suitable for applications wherein space is an issue. In some examples, the filter may be integrated with the compressor 20.

A compressed air dryer unit 50 configured to remove water from compressed air may also be provided in this example. The compressed air dryer unit 50 may be arranged downstream from the compressor 20 (and, in examples, downstream from the above-commented filter and the air suction unit 30). The compressed air dryer unit 50 may be e.g., a refrigerated air dryer unit.

The refrigerated air dryer unit 50 comprises housing 50c which includes an inlet 50a an outlet 50b. The housing 50c may be formed from sheet metal or other suitable material of a thickness sufficient to provide the necessary structural strength for the components forming part of the air dryer unit 50. The housing 50c may have any shape desired, such as a round shape, a rectangular, triangular, or other polygonal shape, an irregular shape, and the like. The housing 50b illustrated in figure 2 has a generally rectangular shape, and has a back wall (not visible), a front wall 50d, sidewalls 50e, 50f, and a base wall 50g. Together, the back wall, front wall, sidewalls, and base wall define an interior space (not visible) of the refrigerated air dryer unit 50.

As shown in the figure, the inlet 50a of the refrigerated air dryer unit 50 may be connected to the outlet 20d of the compressor 20 via a duct 90. Additionally, three valves 91, 92, 93 may be arranged between the inlet 50a of the refrigerated air dryer unit 50 and the outlet 20d of the compressor 20. Each of the valves may have a first position and a second position.

The first position of the corresponding valve 91, 92, 93 allows compressed air to pass through the corresponding valve to the inlet 50a of the dryer unit 50. The first position of the corresponding valve 91 - 93 may be additionally defined as the open position of the valve. The second position of the corresponding valve 91, 92, 93 does not allow gas to pass through the valve 91, 92, 93. The second position of the input valve may additionally be defined as the closed position of the corresponding valve. The valve 91 may also allow to pass compressed air through a bypass duct, as will be explained later on.

Water particles may be removed from the compressed air substantially as follows: The previously compressed air may be received, by the compressed air dryer unit 50, via the inlet 50a. The received compressed air may be cooled, by the compressed air dryer unit 50, which allows a large amount of the water to condense and be separated. Cooling the compressed air may take place e.g., via a closed refrigerated system (not visible) forming part of the compressed air dryer unit 50. After cooling and condensing, the compressed air may be reheated to around room temperature so that condensation does not form on the outside of the system (including the pipes). Finally, the treated compressed air may be released via the outlet 50b of the refrigerated air dryer unit 50.

A contaminating gases capture unit 60 is configured to remove, at least partially, contaminating gases from the compressed air is also provided in this example. The contaminating gases capture unit 60 may be e.g., an activated carbon tower. An example of an activated carbon tower that may be employed is the Activated Carbon Tower 30, available from Ingersoll Rand, among others.

The carbon dioxide capture unit 60 may comprise a chamber 60a comprising an inlet 60b for receiving (polluted) compressed air and an outlet 60c for delivering depolluted compressed air. In this example, the chamber 60a may comprise a substantially circular cross-section although some other shapes of the cross-section may be possible.

As shown in the figure, the inlet 60b of the contaminating gases capture unit 60 may be connected to the outlet 50b of the compressed air dryer unit 50 via a duct 95. It is noted that, in examples wherein the system does not include an air dryer unit 50, the outlet of the compressor 20 may be directly connected to the inlet 60b of the contaminating gases capture unit 60.

Additionally, two valves 98, 99 may be arranged between the inlet 60b of the contaminating gases capture unit 60 and the outlet 50b of the compressed air dryer unit 50. Each of the valves may have a first position and a second position.

The first position of the corresponding valve 98, 99 may allow compressed air to pass through the valve to the inlet of the of the contaminating gases capture unit 60. The first position of the corresponding valve may be additionally defined as the open position of the valve. The second position of the corresponding valve 98, 99 may not allow gas to pass through the corresponding valve 98, 99. The second position of the input valve may additionally be defined as the closed position of the input valve.

A further duct 190 may be provided between the inlet 50a of the air dryer unit 50 and the outlet 50b of the air dryer unit 50. A further valve 191 may be provided, in the duct 190, between the inlet 50a and the outlet 50b. The structure and operation of the valve 191 may be the same as hereinbefore described.

Referring again to the carbon dioxide capture unit 60, the chamber 60a may extend longitudinally from a first end to a second end. The chamber may comprise a bottom surface 60f, a top surface 60h, and a circular sidewall 60g including an inner surface (not visible) and a space (not visible) being formed in an interior of the circular chamber 60a. An activated carbon material may be situated in such space. The activated carbon material (specifically its active carbon surface) may be configured to absorb odors and vapors which may be comprised in the compressed atmospheric air.

One or more filters (not visible) may also be comprised in the space formed in the interior of the housing of the carbon dioxide capture unit 60. The filters may be e.g., sieves with a corresponding mesh. The mesh may comprise a plurality of pores. The pores of the corresponding mesh of at least one of the sieves may comprise a pore diameter between 0.3 µm and 0.2 µm, specifically 0.3 µm. Due to the employed pore diameter, pollutants e.g., carbon dioxide, nitrogen dioxide, sulfur dioxide and / or methane, comprised in the compressed air cannot pass through the sieve and thus are filtered by the sieve. However, the compressed air without such pollutants passes through the sieve.

It is noted that, contrary to some other prior art solutions, the carbon dioxide capture unit 60 may not include a PSA (pressure swing system). The reasoning is that the aim of the carbon dioxide capture unit 60 is not to separate and isolate the different pollutants comprised in the compressed air (e.g., isolate and separate the carbon dioxide with respect to the nitrogen dioxide) but merely capture (together) the pollutants present in the compressed air. However, in some examples, the system may include a PSA.

In this respect, the (polluted) compressed air may be depolluted substantially as follows: Compressed air (from which water and moisture has been, at least partially, removed) may be received via the inlet 60b and introduced in the spaced formed inside the carbon dioxide capture unit 60. Odors and vapors related to the compressed air may, at least partially, be absorbed by the activated carbon material. Further, the compressed air (stream) may pass through one or more sieves (not visible) situated in such space. The sieves may be carbon activated sieves. The particles whose diameter is smaller than the pore diameter of the mesh of the corresponding sieve may pass through the sieve. However, the pollutants whose diameter is larger than the pore diameter of the mesh of the corresponding sieve may be collected in such sieve. As a result, depolluted compressed air may be obtained. The depolluted compressed air may be released via the outlet 60c. Regularly, the pollutant particles collected in the mesh of the corresponding sieve may be removed by an operator or by other means.

An air expansion unit 70 configured to store decontaminated atmospheric air (which may be compressed at a relatively low pressure) and release the previously decontaminated atmospheric air to the atmosphere is also provided in this example. The air expansion unit may be e.g., a pressure vessel. The atmospheric air which is to be released by this vessel may have been depolluted as hereinbefore described.

One of the purposes of the air expansion unit 70 is to act as temporary storage, and thus store depolluted atmospheric air before it is released to the atmosphere. Demands upon the system 10 may vary and the air expansion units 70 may be configured to meet these demands without causing any service interruption related to the release of clean atmospheric air. The compressor 20 starting and stopping may cause pressure fluctuations/pulsations, but the expansion unit 70 may be configured to dampen such fluctuations of the incoming depolluted compressed air. Particularly, the expansion unit 70 may be configured to deliver steady constant pressure of clean air which is better suited for end consumers. The vessel 70 is also suitable for reducing the pressure of the received air (which may be slightly pressurized e.g., at a pressure between 1 bar and 3 bar, specifically at a pressure of 1 bar).

The expansion unit 70 may comprise a tank 70a comprising an inlet 70b for receiving depolluted (and slightly compressed) atmospheric air and an outlet 70c for delivering clean atmospheric air (at a pressure at or near 1 bar). In this example, the tank 70a may comprise a substantially circular cross-section although some other shapes of the cross-section may be possible. As shown in this figure, a round shape with no sharp corners ensures that the pressure is distributed as evenly as possible. Any corners or sharp edges used in construction are referred to as 'stress raisers' are avoided in the expansion unit 70 as they weaken the vessel's structural strength. The expansion unit 70 is typically manufactured using a single sheet of metal e.g., a sheet of steal.

The tank 70a may extend longitudinally from a first end to a second end. The tank 70a may comprise a bottom surface 70f, and upper surface 70j, a circular sidewall 70g including an inner surface (not visible) and a space (not visible) being formed in an interior of the circular tank 70b. The inlet 70b may be situated at the circular sidewall (particularly at or near the bottom surface 70f of the tank 70a). An outer surface of the vessel may be covered in primer or paint whilst the inner surface may be typically bare steel. In examples, the inner surface of the tank 70a may be epoxy or resin coated to increase the corrosion resistance.

As shown in the figure, the inlet 70b of the expansion unit 70 may be connected to the outlet 60c of the carbon dioxide capture unit 60 via a duct 100. Additionally, two valves 101, 102 may be arranged between the inlet 70b of the expansion unit 70 and the outlet 60c of the carbon dioxide capture unit 60.

The valve 101 may have a first position and a second position. The first position of the valve 101 may allow depolluted compressed air to pass through the valve to the inlet 70b of the of the expansion unit 70. The first position of the valve may be additionally defined as the open position of the valve. The second position of the valve 101 may not allow depolluted compressed air to pass through the valve 101. The second position of the input valve may additionally be defined as the closed position of the input valve.

The valve 102 may be an expansion valve configured to remove pressure from the compressed air to allow expansion or change of state from a liquid to a vapor in the expansion unit 70. As a result, once the depolluted compressed air passes through the valve 102, the pressure of the air may be reduced e.g., the pressure of the air within the expansion unit 70 may be between 1 bar and 3 bar, preferably 1 bar. The expansion unit 70 may thus store clean atmospheric air (which may be slightly compressed or at 1 bar) with a pressure which is substantially lower as compared with the pressure of the compressed air before passing through the valve 102. Additionally, due to the fact that the compressed air is introduced in a relatively large space formed in the interior of the vessel 70, the pressure of the air, once is situated inside the vessel, may be further reduced.

The tank 70a may further comprise a pressure gauge 70h which may provide, to the maintenance personnel, a local visual indication of the vessel 70a pressure. The pressure gauge may be e.g., a bourdon type gauge. The pressure gauge 70h may usually be isolated from the tank using a valve (not shown); this makes replacement of the gauge possible without the need to drain the pressure from the whole vessel 70a. The pressure gauge may be equipped e.g., with shatter-proof glass.

The chamber may further comprise a safety relief valve (SRV) 70i. The safety relief valve 70i may be spring loaded. A SRV spring tension may be calculated so that it keeps the valve closed unless a specified pressure within the vessel 70 is reached, at which point a spring will compress and the SRV will open.

The tank 70a may also be provided with a condensate drain valve (not shown). It is typically an important issue to remove condensate to prevent corrosion of the vessel's interior. This may be performed using such drain valve. In examples, the drain valve may be a manually operated valve that may be opened at scheduled intervals in order to drain the condensate. Alternatively, the drain valve may be automatically operated such that the condensate is drained at scheduled intervals for a set period of time e.g., once a day for 30 seconds.

The tank 70a may also be provided with a fusible plug (not visible) which is configured to protect the vessel from over temperature. The chamber may also be provided with Inspection ports (not shown) e.g., sight holes, hand holes or manholes. Inspection ports may allow maintenance personnel to view the interior of the chamber and perform a condition assessment. It may also be possible to access the interior of the vessel, by such maintenance personnel, through a corresponding inspection port for cleaning purposes.

The compressed air received by the expansion unit 70 may typically be relatively hot. By storing the compressed air within the expansion unit some of the heat may be transferred to the surrounding air. A reduction in heat may be accompanied by a reduction in pressure of the compressed air which raises the overall system 10 efficiency.

In summary, the expansion unit 70 may be configured to store clean atmospheric air at a relatively low pressure (between 1 and 3 bar, specifically 1 bar). However, when requested, the expansion unit may release such clean atmospheric air (e.g., at a pressure at or near 1 bar) to the atmosphere via the outlet 70c. It is noted that the outlet 70 may comprise a further valve to further reduce the pressure of the clean atmospheric air as the air passes through the valve.

Following the example, the system 10 may further comprise a bypass conduit 140 comprising a first end 140a and a second end 140b. The first end 140a of the bypass conduit 140 may be connected to the duct 90 at a position situated between the valve 90 and the valve 91. The second end 140b of the bypass conduit 140 may be connected to the duct 95 at a position situated between the outlet of the compressed air dryer unit 50 and the inlet of the contaminating gases capture unit 60.

The bypass conduit 140 may allow compressed air to pass from the compressor unit 20 to the contaminating gases capture unit 60 without passing through compressed air dryer unit 50. This advantageously allows the production of depolluted compressed air (and thus the production of depolluted atmospheric air) even if maintenance is performed on the compressed air dryer unit. Additionally, such an arrangement allows the compressed air dryer unit to be protected if the conditions (e.g., pressure, temperature, humidity) of the compressed atmospheric air from which water has been previously removed are not within suitable operational ranges.

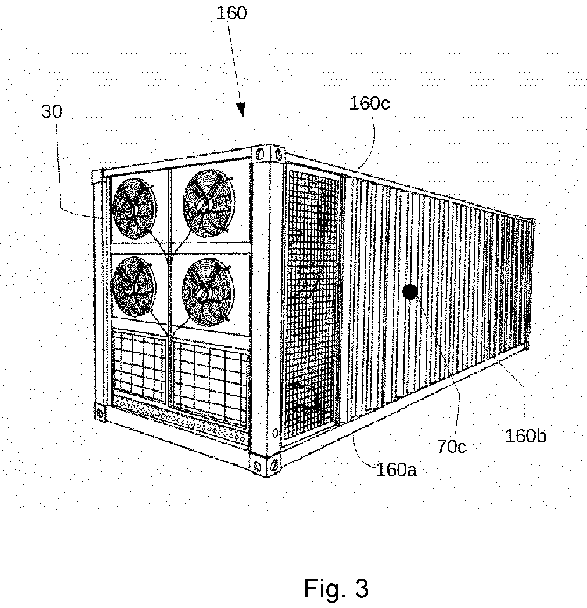

Figure 3 schematically illustrates an example of the housing configured to accommodate a system for the removal of one or more contaminating gases from atmospheric air which may be the same or similar to the one shown with reference to figure 2. In figure 3, same elements denote the same numbers as described in figures 1 -2.

A housing 160 e.g., a container is provided in this example. The container may have e.g., a length between 6 meters and 12 meters i.e., the container may be relatively small. The housing comprises four suction units 30. The housing may be a cuboid including a bottom surface 160a, a side wall enclosure 160b, an upper surface 160c and a housing space (not visible) being formed in an interior of the enclosure. The housing space being formed in the interior of the housing accommodates, in use, a system for the removal of one or more contaminating gases from atmospheric air, according to some examples, as hereinbefore described.

In this example, the housing 160 may be configured to act as the expansion unit further configured to release depolluted atmospheric air to the atmosphere. Particularly, depolluted compressed air may be provided to the space formed in the interior of the housing as hereinbefore described. Since the housing is configured to act as an expansion unit e.g., as a pressure vessel, the housing may be configured to store clean atmospheric air at a relatively low pressure (between 1.5 and 5 bar). However, when requested, the housing (acting as an expansion unit) may release such clean atmospheric air (at a pressure at or near 1 bar) to the atmosphere via an outlet 70c.

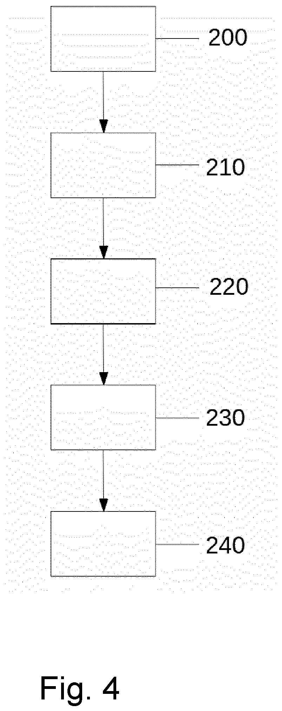

Figure 4 is an illustration of a block diagram describing an example of a method for the removal of one or more contaminating gases from atmospheric air.

A system for the removal of one or more contaminating gases from atmospheric air as hereinbefore described may be provided.

At block 200, atmospheric air may be received by the compressor. At this stage, the atmospheric air may be polluted with contaminants such as carbon dioxide, nitrogen dioxide, sulfur dioxide and / or methane among others.

At block 210, the received atmospheric air may be compressed.

At block 220, the above-commented pollutants may be, at least partially, removed from the compressed atmospheric air using the contaminating gases capture unit. As a result, pollutants such as carbon dioxide, nitrogen dioxide, sulfur dioxide and / or methane among others may be, at least partially, removed from the received compressed air.

At block 230, the compressed air may be at least partially decompressed within the pressure vessel. The obtained clean atmospheric air may be store, within the vessel, at a pressure between 1 bar and 3 bar, specifically 1 bar.

At block 240, the decontaminated atmospheric a may be released to the atmosphere (at a pressure at or near 1 bar) by the vessel.

It is noted that, during the performance of a method for the removal of one or more contaminating gases from atmospheric air using a system as hereinbefore described, the system may generate water including waste pollutant particles. This polluted water may be stored in a suitable vessel and it may be used e.g., as a fertilizer. It is further noted that this polluted water may contain most of the compounds that exist in natural groundwater. Additionally, it may be possible to manufacture nitric acid from the NO₂ contained in the atmosphere to create ammonia by mixing it with water.

Although only a number of examples have been disclosed herein, other alternatives, modifications, uses, and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A system for the removal of one or more contaminating gases from atmospheric air, the system comprising:
- a compressor unit configured to receive and compress atmospheric air,
- a contaminating gases capture unit configured to remove, at least partially, the contaminating gases from the compressed atmospheric air, wherein the contaminating gases capture unit is arranged downstream from the compressor unit,
- an air expansion unit configured to release depolluted atmospheric air to the atmosphere, wherein the air expansion unit is arranged downstream from the contaminating gases capture unit.

2. A system according to claim 1, further comprising an air dryer unit for removing water from the compressed atmospheric air, wherein the air dryer unit is arranged downstream from the compressor unit.

3. A system according to any of claims 1 - 2, wherein the contaminating gases comprise one or more of the following gases: COx, NOx, SOx and / or methane.

4. A system according to any of claims 1 - 3, wherein the compressor unit is configured to compress the received atmospheric air at a pressure between 7 bar and 16 bar, specifically at a pressure of 7 bar.

5. A system according to any of claims 1 - 4, wherein the contaminating gases capture unit comprises an activated carbon tower including activated carbon with an active surface configured to absorb odors and / or vapors comprised in the compressed atmospheric air.

6. A system according to any of claims 1 - 5, wherein the contaminating gases capture unit comprises one or more sieves including a filter mesh, wherein the sieves are configured to remove contaminating gases as the compressed air passes through the corresponding filter mesh, specifically the corresponding filter mesh of at least one of the sieves comprises a pore diameter between 0.3 µm and 0.2 µm.

7. A system according to any of claims 1 - 6, wherein the compressor unit comprises a tank, wherein the tank comprises:
- an inlet configured to receive atmospheric air, and
- an outlet configured to supply compressed atmospheric air.

8. A system according to claim 7 when dependent on claim 2, wherein the air dryer unit comprises a housing, wherein the housing comprises:
- an inlet in fluid communication with the outlet of the compressor unit, wherein the inlet is configured to receive the previously compressed atmospheric air, and
- an outlet configured to supply compressed air from which water has been at least partially removed.

9. A system according to claim 8, wherein the contaminating gases capture unit comprises a chamber, wherein the chamber comprises:
- an inlet in fluid communication with the outlet of the air dryer unit, wherein the inlet is configured to receive compressed air from which water has been at least partially removed, and
- an outlet configured to supply compressed gas which is at least partially decontaminated from contaminating gases.

10. A system according to claim 9, wherein the air expansion unit comprises a tank, wherein the tank comprises:
∘ an inlet fluid communication with the outlet of the contaminating gases capture unit, wherein the inlet is configured to receive atmospheric air which has been at least partially decontaminated from contaminating gases, and
∘ an outlet configured to supply decontaminated atmospheric air to the atmosphere.

11. A system according to any of claims 1 - 10, wherein the system further comprises an expansion valve configured to remove pressure from the compressed air to allow expansion or change of state of the compressed air, wherein the expansion vale is arranged between the contaminating gases capture unit and air expansion unit.

12. A system according to any of claims 1 - 11, further comprising an air suction unit configured to absorb and drive atmospheric air to the compressor unit, wherein the compressor unit is arranged downstream from the air suction unit.

13. A kit including:
a system for the removal of one or more contaminating gases from atmospheric air according to any of claims claim 1 - 9 and 11 - 12,
a housing for accommodating the system.

14. A kit according to claim 13, wherein the housing is configured to act as the expansion vessel adapted to release the previously decontaminated atmospheric air to the atmosphere

15. A method for the removal of one or more contaminating gases from atmospheric air using a system according to any of claims 1 - 12, the method comprising:
- receiving atmospheric air,
- compressing the received atmospheric air,
- removing, at least partially, contaminating gases from the compressed atmospheric air,
- decompressing, at least partially, the depolluted compressed air,
- releasing depolluted atmospheric air to the atmosphere.
